# EUROPEAN PATENT APPLICATION

(11) **EP 1 624 655 A1**
(43) Date of publication of application: **08.02.2006**
(21) Application number: 05381017.2
(22) Date of filing: 05.04.2005
(51) Int. Cl.: H04M 3/51

(54) **Telephone assistance and intercommunication system**

(30) Priority: 02.06.2004 AR 0401899
(71) Applicant: Marcelo Vallarino, Jorge, Capital Federal (AR)
(72) Inventor: Marcelo Vallarino, Jorge, Capital Federal (AR)
(74) Representative: Elzaburu Marquez, Alberto

(57) **Abstract**

Telephone assistance and intercommunication system, consisting of the intercommunication, once a specific telephone number has been dialled, between a communication means and a call centre receiving calls from the tourist, where call centre staff answer in the tourist's own language, assisting him with questions regarding the language of the country he is visiting or any other information relating to his stay in said country. Said communication means is preferably a mobile phone, whose use with the call centre is free of charge. In addition, the call centre staff is prepared to assist, through the tourist's communication means, third parties in order to resolve a lack of understanding between said person and the tourist arising from their not being familiar with each other's language.

## Description

### FIELD OF THE INVENTION

The present invention relates to a telephone assistance and intercommunication system, preferably based on mobile telephony and for use by tourists, realized using telecommunications technology.

### BACKGROUND OF THE INVENTION

Everyone knows the problems encountered when visiting a country where the language spoken is not exactly your own, or even is totally incomprehensible owing to a total lack of similarities in at least some of the words.

Furthermore, bearing in mind that if we need to telephone anyone in particular, such as a credit card company, or a health assistance organization, an embassy or consulate or the like, we must use a telephone directory or call a telephone number in our country of origin, requiring the use of the public telephone services in the country we are in.

The situation is even more complicated when we want to visit tourist areas or travel within a city where everything is new, where perhaps even the alphabet of the language is not the same as our own, and where we do not know who to trust or whether the information we are given is true.

There is no doubt that all these problems influence where we decide to spend our holidays, a joint decision as our holidays are our time to relax, our reward for the whole year spent working.

Another problem encountered in countries with a different language is understanding posters or notices in public areas. This can even lead to accidents in many cases, for example if one hires a means of transport and has to travel on roads in said country without understanding all the road signs.

The language barrier can also be limiting when making purchases, due to the difficulty in asking for more products, of different colour or size, limiting us to buying only what we see and not what we really want.

By virtue of the invention proposed in the present application, the person will have access to general assistance from someone who speaks their own language and who knows all about the country in which that person is.

Regarding the closest prior art, airlines offer traveller assistance centres, but these centres unfortunately only provide information relating to the transport service. Also within this group, various user assistance centres are known, each for a particular service, there currently not being any centralization for the customer, who thus has to call various different telephone numbers, which are often not available to him.

The present invention aims to solve all these problems through the use of a means of direct communication with a global tourist assistance centre, which provides him with an online personal interpreting service, answering any question asked by the tourist regarding the country he is visiting, or alternatively connecting the user to the person or company he wishes to speak to.

This feature is enhanced by the use of mobile telephones, which the users receive when they arrive in the country.

These mobile phones may be either rented or sold to users (tourists), it moreover being possible for any mobile phone from this country to be available for use as such, on a prepaid basis, or by charging the cost of each call to a credit card.

In addition, since each traveller is associated with a particular mobile phone, the service centre continually sends information, preferably in text format, relating to tourist areas, travel promotions for the country, city tours, places for buying crafts, places for buying typical articles, etc.

According to a variant of the present invention, the user himself authorizes the sending of information to him from the call centre. In other words, if he only wishes to receive information on "Music in Buenos Aires", the call centre will not send information other than that selected by the user.

A person possessing this mobile phone will be attended to in his own language and receive assistance with problems concerning the language in the country, and all kinds of tourist information. As mentioned, he may be put through to any company within the country or abroad he needs to speak to.

This mobile telephone, through which the service is provided, can also be used by the user as a means of communicating with family or friends in his country of origin.

Account is also taken of the fact that, if the user makes a call within the country he is visiting, for example to reserve a table at a restaurant, the call will be charged at local rate, unlike if he used his own mobile telephone, since if he used this phone it would be charged as an international call.

### DESCRIPTION OF THE INVENTION

In accordance with the above, a main aim of this invention is to provide a telephone assistance and intercommunication system by means of which the user will receive assistance in his own language with services such as translation, online interpreting and/or tourist information on the country visited.

In a preferred form of the present invention, the mobile phone will have various numbers that provide access to various user assistance centres, each one for a particular country.

For example, if the tourist is visiting Europe, his mobile phone will contain various assistance numbers, each of which will communicate directly with the tourist assistance centre in, for example, Spain, Italy, Germany, the Netherlands, France, and all other countries to be visited.

The tourist in question may either sign up to this service in his country of origin, receiving the mobile phone allowing him to access these important services there, or may sign up to the service with the airline with which he is travelling to the country visited.

More specifically, the call from the mobile phone to the tourist assistance centre is preferably free of charge, so that any problem or question the customer has can be dealt with without the complication of any payment by the user.

More specifically with regard to the operation of the system proposed herein, the communication between user and call centre will be generated subject to acceptance of the service by the user, and the various kinds of information that call centre staff will provide to the tourist using the system in his own language.

Clearly, in addition to the assistance provided by said call centre to the tourist through its staff, said call centre staff will be authorized and prepared to access a communication with a third person, always through the tourist's communication means, in order to help resolve a lack of understanding between said third person and the tourist arising from their not being familiar with each other's language.

It is not ruled out that the present intercommunication system be also valid even with public telephones, i.e. if the user loses his mobile phone and requires immediate assistance, he can continue to use the service from any telephone.

Obviously, access to the system via an external telephone, i.e. other than the mobile phones provided, will require the entry of security codes, as is the case with many telephone services with access codes.

There are countless additional services that can be provided through the present system. The user only has to accept the purchase of the goods and/or services offered and the purchase will be taken care of by the call centre, on behalf of the user.

Bearing in mind emerging telecommunications technologies, it will be possible to locate the position of the user using his mobile phone, and, for example, provide him with the information necessary to get to where he wants to go.

It is also understood that the user of the present invention will also be able to use the mobile telephony services currently available.

The nature of the present invention and the way in which it must be embodied having thus been specifically described and determined, the following is claimed by way of exclusive right and property:

## Claims

1. Telephone assistance and intercommunication system, for application to tourist assistance, **characterized in that** it consists of the intercommunication, once a specific telephone number has been dialled, between a communication means and a call centre receiving calls from the tourist, where call centre staff answer in the tourist's own language, assisting him with questions regarding the language of the country he is visiting or any other information relating to his stay in said country.

2. Intercommunication system according to Claim 1, **characterized in that** said communication means is a mobile phone.

3. Intercommunication system according to Claim 1, **characterized in that** said communication means is a public telephone.

4. Intercommunication system according to Claim 1, **characterized in that** information text messages are generated in said call centre and sent to the user's communication means.

5. Intercommunication system according to Claim 1, **characterized in that** the communication between the communication means and the call centre is free of charge.

6. Intercommunication system according to Claim 1, **characterized in that** said call centre staff will be prepared to assist, through the tourist's communication means, third parties in order to resolve a lack of understanding between said person and the tourist arising from their not being familiar with each other's language.

7. Intercommunication system according to Claim 1, **characterized in that** the call centre is able to connect the user's communication means to any telephone number he needs to contact.
